# FASCICULE DE BREVET EUROPEEN

(11) **EP 3 380 788 B1**
(45) Date de publication et mention de la délivrance du brevet: **20.01.2021**
(21) Numéro de dépôt: 16805901.2
(22) Date de dépôt: 28.11.2016
(51) Int. Cl.: F23G 5/16, F23G 5/46, F23G 7/06, F23C 6/04, F23L 7/00

(54) **BRÛLEUR**
BRENNER
BURNER

(30) Priorité: 26.11.2015 CH 17282015
(43) Date de publication de la demande: 03.10.2018
(73) Titulaire: Fireforce Technology Sarl, 1350 Orbe (CH)
(72) Inventeur: VAN DER VEKEN, André, 1470 Seiry (CH)
(74) Mandataire: Omnis-IP
(86) Numéro de dépôt international: PCT/IB2016/057156
(87) Numéro de publication internationale: WO 2017/090012

(56) Documents cités:
- EP-A1- 0 413 104
- EP-A1- 1 486 729
- EP-A1- 2 669 575
- DE-A1- 19 613 777
- DE-A1- 19 619 919
- DE-A1-102004 034 211
- US-A- 6 155 818

## Description

### Domaine technique

La présente invention concerne un brûleur pour combustibles gazeux ou gazéifiables. Selon un aspect important, le brûleur de l'invention permet la combustion à température modérée, sans flamme visible, et est caractérisé par un taux d'émissions particulièrement faible, notamment en ce qui concerne le CO, les particules solides, et les oxydes d'azote (NOₓ). La présente invention se prête à l'utilisation avec un grand nombre de combustibles.

### Etat de la technique

On connaît dans la technique plusieurs variantes de brûleurs permettant d'utiliser toutes sortes de combustibles. Les brûleurs à flamme provoquent une haute température localisée, ce qui entraîne la formation de substances polluantes indésirables, tels que les NOₓ.

On connaît aussi des brûleurs sans flamme qui allient une bonne efficacité énergétique et des faibles émissions. Dans ces brûleurs, connus aussi sous le nom de brûleurs FLOX®, une partie des gaz brûlés est recyclée dans la zone de combustion. De cette manière, on rend le mélange plus pauvre et on obtient une combustion diffuse dont la température est plus uniforme que dans les dispositifs conventionnels. Ces avantages, toutefois, demandent un réglage approprié des paramètres de combustion. Dans ces brûleurs, le carburant et le gaz comburant sont injectés en même temps et au même endroit dans la chambre de combustion en sorte qu'on obtient, idéalement, une concentration optimale et homogène de ces composantes. Si les conditions optimales ne sont pas atteintes, des déséquilibres peuvent se produire qui entraînent une combustion imparfaite.

Afin d'atteindre les conditions de combustions optimales, les brûleurs connus plus performants sont des constructions complexes, nécessitant une fabrication précise avec un grand nombre de pièces assemblées avec des tolérances serrées. Ceci a évidemment un effet néfaste sur le coût du produit et parfois, aussi sur sa fiabilité.

Le brûleur de l'invention peut être adapté pour utiliser un grand nombre de substances combustibles, par exemple du gaz combustible, des liquides inflammables, des solides, ou encore les gaz et produits volatiles résultant d'une réaction de pyrolyse. Dans cette dernière application, le brûleur de l'invention est particulièrement performant et peut être avantageusement couplé à un fourneau à pyrolyse pour produire charbon et énergie à partir de bois ou de produits végétaux. Lorsque le charbon de bois est utilisé pour l'amélioration du sol ou séquestré de n'importe quelle façon, ces installations peuvent produire de l'énergie renouvelable avec un bilan CO₂ positif.

Le document EP2184538 décrit un brûleur FLOX avec recyclage des gaz brûlés.

Le document EP2669575 divulgue un brûleur dans lequel le flux d'oxydant est varié périodiquement. Ce document ne décrit pas, toutefois, des injecteurs étagés par rapport au mouvement du combustible. De même, EP1486729 décrit un brûleur avec des injecteurs d'air et d'eau disposés latéralement, mais sans recyclage des gaz brûlés. D'ailleurs ce brûleur est optimisé pour la dégradation thermique des PCB et opère à des températures très élevées. DE19619919, DE19613777, DE102004034211, EP0413104 et US6155818 décrivent d'autres solutions intéressantes comme background technologique.

### Bref résumé de l'invention

Un but de la présente invention est de proposer un brûleur exempt des limitations des dispositifs connus.

Un autre but de l'invention est de proposer un brûleur qui permet une combustion propre, énergétiquement efficace, accompagnée d'un faible niveau d'émissions de NOₓ et de CO.

Selon l'invention, ces buts sont atteints notamment au moyen d'un brûleur avec recirculation de gaz inerte ou de gaz de combustion dans la zone de combustion et injection étagée, défini par les revendications annexées.

### Brève description des figures

Des exemples de mise en œuvre de l'invention sont indiqués dans la description illustrée par les figures annexées dans lesquelles :
La figure 1 illustre schématiquement un brûleur selon un aspect de l'invention associé à une source de combustible. La figure la en illustre le détail 'A' agrandi.
Les figures 2 et 3 illustrent des variantes du brûleur de l'invention.

### Exemple(s) de mode de réalisation de l'invention

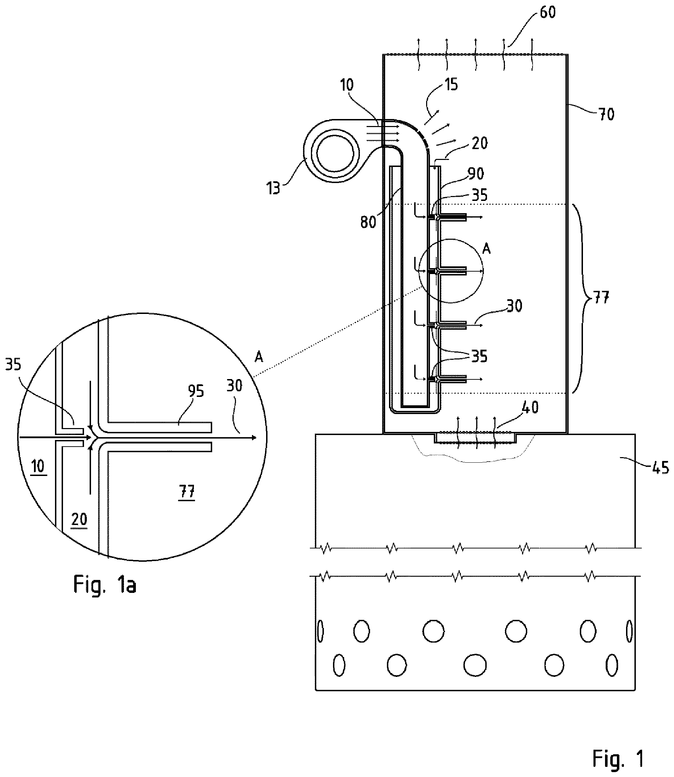

Dans le mode de réalisation de l'invention illustré par les figures 1 et la, la chambre de combustion 70 est un corps cylindrique vertical qui peut être réalisé en acier ou en tout autre matériau approprié. Bien évidemment, l'invention pourrait être mise en œuvre par des chambres de combustion de forme et/ou orientation différentes : ces caractéristiques ne sont pas essentielles pour l'invention.

Dans l'exemple illustré, un gaz combustible 40 est produit par un fourneau à pyrolyse 45 dans lequel on transforme du bois ou un matériau similaire en charbon, avec la production de gaz et vapeurs combustibles. Les combustibles, produits et préchauffés par la pyrolyse, entrent par une ouverture inférieure et remontent vers le haut par convection naturelle, traversent la zone de combustion 77 dans laquelle ils sont transformés en produit brûlés 60, et sortent par l'ouverture supérieure.

Le présent dispositif a été spécialement conçu pour brûler des produits de pyrolyse, et a fourni des résultats très satisfaisant dans cette application, étant capable d'un rendement énergétique élevé avec un faible taux d'émissions. Cependant, l'invention peut être adaptée pour brûler n'importe quel combustible, qu'il soit gazeux, volatile, un liquide atomisé, ou une substance solide pulvérisée. Le mouvement du combustible peut être par convection naturelle, comme c'est le cas dans cet exemple, ou poussé par une soufflante, par exemple.

Une première conduite 80 sert à l'introduction d'air comburant dans la zone de combustion 77, indispensable à la combustion. Dans l'exemple illustré, il descend dans la zone de combustion en restant en position périphérique. Ceci n'est pas une caractéristique indispensable de l'invention. La première conduite 80 pourrait en effet être en position centrale ou encore externe à la zone de combustion 77. L'air 10 est pulsé par un ventilateur 13 ou par tout autre moyen approprié créant une différence de pression. L'invention inclut aussi des variantes dans lesquelles l'air comburant est appelé dans la chambre de combustion par une dépression crée en aval, par exemple par une cheminée à convection naturelle ou forcée.

Le principal du gaz comburant 10 n'est pas déchargé directement dans la zone de combustion. La première conduite 80 est entourée, au moins partiellement, par une conduite 90 de gaz inerte 20, en ce cas un gaz brûlé prélevé en aval de la zone de combustion 77, donc un gaz avec une capacité oxydante nulle ou au moins fortement réduite par rapport à celle du gaz comburant 10. Le comburant 10 est mélangé au gaz inerte 20 par les injecteurs 35 et le mélange 30 est injecté par les becs d'injection 95 dans la zone de combustion 77. La vitesse d'éjection de l'air 10 par les injecteurs 35 engendre, par effet Venturi, une dépression qui appelle le gaz inerte 20 à descendre dans la conduite 90.

De façon importante, l'injection du mélange 30 air/gaz brûlés est à plusieurs étages, disposés un après l'autre dans la zone de combustion, relativement au mouvement (vertical dans cet exemple) du combustible, en sorte qu'un profil vertical de combustion s'établit. De plus, la vitesse de l'air pulsé provoque un puissant brassage transversal. Des essais techniques ont démontré que ce dispositif permet d'obtenir une combustion optimale et peu polluante des gaz 40. De surcroît, son réglage est excessivement simple car il se réduit au choix de la vitesse du ventilateur 13. Ce paramètre est d'ailleurs peu critique, et les essais suscités ont prouvés que des amples variations de vitesse de ventilation ont un effet très limité sur le fonctionnement du brûleur de l'invention, qui est par conséquent tout particulièrement adapté à des installations simples et ne nécessitant pas une surveillance pointue.

La construction du brûleur est aussi particulièrement simple et ne requiert pas d'usinages et ajustages de précision. Il est bon de mentionner que la géométrie des injecteurs 35 pourrait être beaucoup plus raffinée que ce qui est représenté, comme le témoignent grand nombre d'injecteurs à effet Venturi connus dans la technique. La structure illustrée, cependant, a fourni des résultats tout à fait satisfaisants et a l'avantage d'une construction simple et peu onéreuse.

Optionnellement, on peut prévoir, en amont des injecteurs 95 et plus haut de la zone de combustion, une injection directe d'air 15 dans la chambre de combustion. Cette injection permet de brûler des éventuels produits combustibles qui n'auraient pas été entièrement consommés dans la zone de combustion 77.

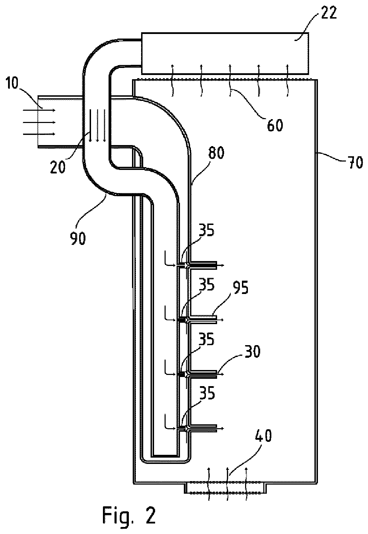

La Figure 2 représente une variante du brûleur de l'invention dans laquelle la conduite de gaz inerte est disposée à l'intérieur de la première conduite du gaz comburant. Dans cette variante, le gaz inerte est pressurisé, par exemple par une pompe ou un ventilateur, non représenté, et se mélange avec le gaz comburant (p. ex. air) dans les injecteurs 35 qui sont placés sur la paroi latérale de la conduite 90 de gaz inerte, en face des becs d'injection 95 de la première conduite 80 d'air. Cette variante présente les mêmes avantages que celle de la Figure 1 en ce qui concerne la qualité de la combustion, avec cette différence que le gaz inerte est prélevé de l'extérieur et qu'il est le fluide moteur des injecteurs 35, en sorte que l'air 10 (comburant) est aspiré par effet Venturi.

Plusieurs sortes de gaz inertes peuvent être employées dans cette variante, par exemple de l'azote, de l'anhydride carbonique ou de la vapeur d'eau sous pression. La figure 2 illustre notamment une variante particulièrement avantageuse dans laquelle le gaz inerte 20 est de la vapeur d'eau pressurisée produite par un générateur de vapeur 22 (illustré ici de manière très schématique), préférablement chauffé par le brûleur lui-même.

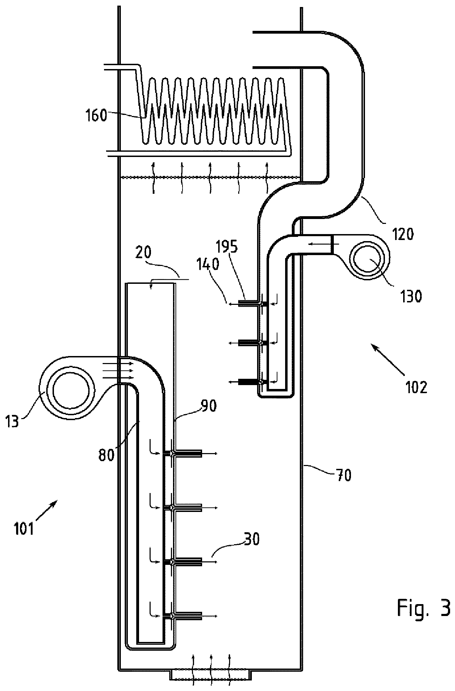

Le mode de réalisation de la figure 3 comporte deux groupes d'injection 101 et 102, positionnés à hauteurs différentes dans la chambre de combustion. Dans l'exemple illustré, les groupes d'injection 101 et 102 sont positionnés en périphérie et en vis-à-vis, mais cela n'est pas une caractéristique essentielle. Les groupes d'injection 101 et 102 sont alimentés en gaz comburant par deux soufflantes 13, 130, comme illustré, ou par une seule soufflante commune ou encore par aspiration naturelle, comme mentionné plus haut.

Dans le premier groupe d'injection 101, la conduite 90 de gaz inerte monte jusqu'aux régions supérieures de la zone de combustion, par exemple au-dessus des becs d'injection 195 du second groupe d'injection, ou sensiblement à la même hauteur desdits becs, de façon à aspirer du gaz inerte à température maximale.

Le second groupe d'injection a la fonction, entre autres, de mitiger la température de combustion dans les régions supérieures du brûleur. A cette fin, la conduite externe 120 n'est pas en liaison avec les gaz brûlés chauds, mais avec une source de gaz froid et inerte, par exemple de la vapeur d'eau ou encore le gaz de combustion, mais refroidi. Dans l'exemple illustré, la conduite externe 120 est en communication avec les gaz de combustion en aval d'un échangeur de chaleur 160. Il est possible aussi de combiner les deux sortes de gaz, soit recycler des gaz de combustion, refroidis ou pas, dans la conduite externe, et y injecter de l'eau vaporisée ou nébulisée.

Le brûleur de la figure 3 permet d'obtenir un profil vertical de température optimal et favorable à une combustion complète et propre. Le premier groupe d'injection 101 recycle dans la zone de combustion, des gaz très chauds prélevés près du point le plus chaud de la chambre, ce qui permet une combustion complète et permet aussi de consommer des combustibles peu volatiles, par exemple du mazout.

L'expérience a montré, cependant, qu'un brûleur avec un seul groupe injecteur peut atteindre, au sommet, des températures trop élevées, néfastes pour les matériaux et donnant lieu à la production de NOx. Cet inconvénient est pallié par le second groupe injecteur 102, qui recycle dans la zone de combustion des gaz à température plus basse que ceux recyclés par le premier groupe. Par exemple, le premier groupe injecteur pourrait recycler des gaz brûlés ayant une température de 800 °C et le second groupe 102 des gaz toujours brûlés, refroidis à 200-300 °C.

L'invention présentée ne se réduit aux seuls exemples décrit à l'aide des figures. En particulier elle comprend aussi des variantes dans lesquelles un mélange comprenant un gaz combustible et un gaz inerte ou comburant est injecté de façon étagée de la manière revendiquée. Dans d'autres formes de réalisation, les conduites 80 et 90 ne sont pas nécessairement rectilignes, comme représenté. D'autres variantes sont possibles et l'invention comprend toutes celles ayant les caractéristiques définies par les revendications annexées.

### Numéros de référence employés sur les figures

- 10: gaz comburant
- 13: ventilateur ou soufflante
- 15: orifice pour l'injection de gaz comburant
- 20: afflux de gaz inerte ou de gaz brûlés
- 22: générateur de vapeur
- 30: mélange de gaz
- 35: injecteur
- 40: gaz combustible
- 45: source de combustible, p.ex. fourneau à pyrolyse
- 60: produits brûlés
- 70: chambre de combustion
- 77: zone de combustion
- 80: première conduite de gaz comburant
- 85: conduite du mélange appauvri
- 90: conduite de gaz inerte
- 95: becs d'injection
- 101: premier groupe d'injection
- 102: second groupe d'injection
- 120: conduite externe
- 130: source de gaz inerte
- 140: mélange de gaz mitigé
- 160: échangeur de chaleur
- 195: becs d'injection du second groupe brûleur

## Revendications

1. Brûleur comprenant une chambre de combustion (70) ayant une ouverture d'entrée d'un gaz combustible (40) et une ouverture de sortie de produits brûlés (60), le gaz combustible étant en mouvement entre l'ouverture d'entrée et l'ouverture de sortie et traversant une zone de combustion (77) entre l'ouverture d'entrée et l'ouverture de sortie, ledit brûleur étant **caractérisé en ce qu'**il comporte
une première conduite (80) agencée pour introduire de l'air pulsé dans la zone de combustion (77) et une conduite (90) de gaz inerte (20),
**en ce qu'**il comporte en outre des injecteurs (35) et des becs d'injection (95),
**en ce que** lesdits becs d'injection (95) sont disposés vis-à-vis desdits injecteurs (35), lesdites injecteurs (35) étant agencés pour mélanger l'air avec le gaz inerte, le mélange étant injecté et pulsé par les becs d'injection (95) à plusieurs étages, les becs étant disposés l'un après l'autre dans la zone de combustion relativement au mouvement du combustible,
et **en ce que** lesdits injecteurs (35) sont disposés sur ladite première conduite (80) et lesdits becs d'injection (95) sont disposés sur ladite conduite (90) de gaz inerte, la première conduite (80) étant au moins partiellement entourée par la conduite (90) de gaz inerte ou
**en ce que** lesdits injecteurs (35) sont disposés sur ladite conduite (90) de gaz inerte et lesdits becs d'injection (95) sont disposés sur ladite première conduite (80) de gaz inerte, cette conduite (90) de gaz inerte étant au moins partiellement entourée par ladite première conduite (80).

2. Brûleur selon la revendication 1, dans lequel ledit mélange et l'injection du mélange dans la zone de combustion ont lieu dans un injecteur basé sur l'effet Venturi.

3. Brûleur selon la revendication 1 ou 2, comprenant un ou plusieurs orifices (15) pour l'injection de gaz comburant en aval de la zone de combustion (77).

4. Brûleur selon l'une des revendications précédentes, comprenant un second groupe d'injection, connecté à une source de gaz inerte plus froid que le gaz inerte recyclé par le premier injecteur.

5. Brûleur selon la revendication 4, dans lequel le premier groupe d'injection injecte un gaz inerte constitué par une partie des gaz brutes issus de la combustion, prélevés dans la région supérieure de la chambre de combustion, sensiblement au même niveau, ou plus haut, que le second groupe d'injection.

## Patentansprüche

1. Brenner mit einer Brennkammer (70) mit einer Einlassöffnung für ein brennbares Gas (40) und einer Auslassöffnung für verbrannte Produkte (60), wobei das brennbare Gas zwischen der Einlassöffnung und der Auslassöffnung in Bewegung ist und strömt durch eine Verbrennungszone (77) zwischen der Einlassöffnung und der Auslassöffnung, wobei der besagte Brenner **dadurch gekennzeichnet ist, dass** er Folgendes umfasst
ein erstes Rohr (80), das angeordnet ist, um Druckluft in die Verbrennungszone (77) einzuleiten, und ein Rohr (90) für Inertgas (20),
dass er ferner Düsen (35) und Einspritzdüsen (95) umfasst,
dass die besagten Einspritzdüsen (95) gegenüber den besagten Düsen (35) angeordnet sind, wobei die Düsen (35) so angeordnet sind, dass sie Luft mit Inertgas mischen, wobei die Mischung in mehreren Stufen von den Einspritzdüsen (95) eingespritzt und gezwungen wird; wobei die Düsen nacheinander in der Verbrennungszone relativ zur Bewegung des Brennstoffs angeordnet sind,
und dass die besagten Düsen (35) an dem ersten besagten Rohr (80) angeordnet sind und die Einspritzdüsen (95) an dem Rohr (90) aus Inertgas angeordnet sind, wobei das erste Rohr (80) zumindest teilweise von dem Rohr (90) aus Inertgas umgeben ist oder
dass die Düse (35) an dem besagten Rohr (90) angeordnet sind und die besagten Einspritzdüsen (95) an dem besagten ersten Rohr (80) angeordnet sind, wobei dieses Rohr (90) aus Inertgas zumindest teilweise von dem besagten ersten Rohr (80) umgeben ist.

2. Brenner nach Anspruch 1, wobei das besagte Mischen und Einspritzen der Mischung in die Verbrennungszone in einer Düse auf der Basis des Venturi-Effekts erfolgt.

3. Brenner nach Anspruch 1 oder 2, umfassend eine oder mehrere Öffnungen (15) zum Einspritzen von Brenngas stromabwärts der Verbrennungszone (77).

4. Brenner nach einem der vorhergehenden Ansprüche, umfassend eine zweite Einspritzgruppe, die mit einer Inertgasquelle verbunden ist, die kälter ist als das von der ersten Düse recycelte Inertgas.

5. Brenner nach Anspruch 4, wobei die erste Einspritzgruppe ein Inertgas einspritzt, das aus einem Teil der aus der Verbrennung resultierenden Rohgase besteht, die im oberen Bereich der Brennkammer aufgenommen werden, ungefähr auf dem gleichen Niveau oder höher als die zweite Einspritzgruppe ist.

## Claims

1. Burner comprising a combustion chamber (70) having an inlet opening for a combustible gas (40) and an outlet opening for burnt products (60), the combustible gas being in motion between the inlet opening and the outlet opening and passing through a combustion zone (77) between the inlet opening and the outlet opening, said burner being **characterized in that** it comprises
a first pipe (80) arranged to introduce forced air into the combustion zone (77) and a pipe (90) of inert gas (20),
**in that** it further comprises injectors (35) and injection nozzles (95),
**in that** said injection nozzles (95) are arranged opposite said injectors (35), said injectors (35) being arranged to mix air with inert gas, the mixture being injected and forced by the injection nozzles (95) in several stages, the nozzles being arranged one after the other in the combustion zone relative to the movement of the combustible,
and **in that** said injectors (35) are arranged on said first pipe (80) and said injection nozzles (95) are arranged on said pipe (90) of inert gas, the first pipe (80) being at least partially surrounded by the pipe (90) of inert gas or
**in that** said injectors (35) are arranged on said pipe (90) of inert gas and said injection nozzles (95) are arranged on said first pipe (80) of inert gas, this pipe (90) of inert gas being at least partially surrounded by said first pipe (80).

2. Burner according to claim 1, wherein said mixing and injection of the mixture into the combustion zone takes place in an injector based on the Venturi effect.

3. Burner according to claim 1 or 2, comprising one or more orifices (15) for the injection of combustive gas downstream of the combustion zone (77).

4. Burner according to one of the preceding claims, comprising a second injection group, connected to a source of inert gas colder than the inert gas recycled by the first injector.

5. Burner according to claim 4, wherein the first injection group injects an inert gas consisting of a part of the raw gases resulting from the combustion, taken in the upper region of the combustion chamber, approximately at the same level as, or higher than, the second injection group.
